# EUROPÄISCHE PATENTSCHRIFT

(11) **EP 2 944 842 B1**
(45) Veröffentlichungstag und Bekanntmachung des Hinweises auf die Patenterteilung: **12.07.2017**
(21) Anmeldenummer: 15167107.0
(22) Anmeldetag: 11.05.2015
(51) Int. Cl.: F16D 65/22

(54) **NOCKENWELLENLAGERUNG SOWIE DICHTUNG HIERFÜR**
CAM SHAFT SUPPORT AND SEAL FOR SAME
APPUI D'ARBRE À CAME ET JOINT ASSOCIÉ

(30) Priorität: 12.05.2014 DE 102014106652
(43) Veröffentlichungstag der Anmeldung: 18.11.2015
(73) Patentinhaber: BPW Bergische Achsen KG, 51674 Wiehl (DE)
(72) Erfinder: Koop, Peter, 51545 Waldbröl (DE); Riera, Frank, 51645 Gummersbach (DE)
(74) Vertreter: Bungartz Christophersen Partnerschaft mbB Patentanwälte

(56) Entgegenhaltungen:
- EP-A2- 0 818 635
- DE-A1- 1 680 219
- DE-A1- 3 730 191
- DE-A1- 10 058 353
- DE-C1- 4 412 802
- DE-U1- 8 703 553
- DE-U1- 9 203 447
- DE-U1- 29 613 406

## Beschreibung

Die Erfindung betrifft eine Nockenwellenlagerung mit einer einen Nocken zum Spreizen der Bremsbacken einer Fahrzeug-Trommelbremse tragenden Welle und einem zwischen der Welle und einer Lageröffnung in einem gegenüber dem Fahrzeug drehfesten Bremsträger angeordneten Drehlager, welches, dem Nocken abgewandt, mit einer Dichtung aus einem verdrehfest montierten Befestigungsabschnitt und einem dazu einstückigen Gleitdichtabschnitt versehen ist.

Die Erfindung betrifft ferner eine für eine solche Nockenwellenlagerung geeignete und bestimmte Dichtung, nämlich eine Dichtung für das Drehlager einer Bremsnockenwelle einer Fahrzeug-Trommelbremse, mit einem verdrehfest montierbaren Befestigungsabschnitt und einem dazu einstückigen Gleitdichtabschnitt.

Nockenwellenlagerungen sowie Dichtungen hierfür mit den vorgenannten Merkmalen sind aus der DE 44 12 802 C1, der EP 0 818 635 A2 und der DE 92 03 447 U1 bekannt. Die üblicherweise aus Gummi bestehende Dichtung umfasst einen verdrehfest montierten Befestigungsabschnitt und einen Gleitdichtabschnitt. Der Befestigungsabschnitt sitzt fest auf einem das Drehlager umgebenden Lagergehäuse des Bremsträgers. Gegebenenfalls hält eine Rohrschelle den Befestigungsabschnitt in dieser Montageposition. Der Gleitdichtabschnitt der Dichtung weist an seiner Innenseite die eigentliche Gleitdichtfläche auf, die sich gleitend bzw. schleifend gegen eine in diesem Bereich glattzylindrisch gestaltete Mantelfläche der Bremsnockenwelle anlegt.

Bei der Nockenwellenlagerung nach der DE 44 12 802 C1 kann es zu Undichtigkeiten aufgrund von Montierfehlern kommen, wenn nämlich der Befestigungsabschnitt entweder zu weit auf das Lagergehäuse des Bremsträgers aufgeschoben oder umgekehrt nicht weit genug aufgeschoben montiert wurde.

Der Erfindung liegt die Aufgabe zugrunde, bei einer Nockenwellenlagerung durch geeignete konstruktive Mittel Montierfehler beim Befestigen der Dichtung für das Drehlager zu vermeiden.

Zur Lösung wird bei einer Nockenwellenlagerung mit den eingangs genannten Merkmalen vorgeschlagen, dass der Befestigungsabschnitt auf der Welle montiert ist, und dass der Befestigungsabschnitt zumindest auf einem Teil seiner Länge in eine Vertiefung in der Mantelfläche der Welle ragt.

Indem der Befestigungsabschnitt zumindest auf einem Teil seiner Länge in eine Vertiefung in der Mantelfläche der Welle ragt, wird eine genaue axiale Positionierung der Dichtung in Bezug auf die Bremsnockenwelle erreicht, und damit auch eine genaue axiale Positionierung gegenüber dem Bremsträger, gegen den die an der Dichtung ausgebildete Gleitdichtfläche gleitend bzw. schleifend anliegt. Eine Montage der Dichtung in einer falschen Längsposition oder leicht seitlich verkantet ist nahezu ausgeschlossen, weshalb die an der Abdichtung beteiligten Flächen ohne erhöhten Verschleiß infolge übermäßiger Reibung, und umgekehrt auch ohne eine erhöhte Undichtigkeit arbeiten.

Es ist von Vorteil für die Genauigkeit der axialen Positionierung der Dichtung, wenn die Vertiefung, dem Gleitlager abgewandt, durch eine Wand begrenzt ist, die rechtwinklig zu der Längsachse der Welle angeordnet ist und gegen die sich der Befestigungsabschnitt in Längsrichtung abstützt

Mit einer Ausgestaltung wird vorgeschlagen, dass sich der Befestigungsabschnitt zusammensetzt aus einem zylindrischen Schlauchabschnitt, der einen zylindrischen Abschnitt der Mantelfläche der Welle umschließt, und aus einem gegenüber dem zylindrischen Schlauchabschnitt radial nach innen vorspringenden Kragen, wobei ausschließlich der Kragen in die Vertiefung ragt. Diese kann sich in Wellenlängsrichtung an den zylindrischen Abschnitt anschließen.

Mit einer weiteren Ausgestaltung wird vorgeschlagen, dass die Vertiefung als eine Ringnut in der Bremsnockenwelle ausgebildet ist, deren axiale Länge im Wesentlichen gleich ist der axialen Länge des Kragens.

Ferner wird eine für eine solche Nockenwellenlagerung geeignete Dichtung mit den Merkmalen des Anspruchs 12 vorgeschlagen.

Vorzugsweise ist der Kragen der Dichtung als ein ringförmiger Radialbund ausgebildet, der gemäß einer weiteren Ausgestaltung von viertelkreisförmigem Längsquerschnitt mit einer zu dem Gleitdichtabschnitt hin gerichteten Viertelkreis-Rundung ist. Diese Rundung erleichtert beträchtlich die Montage der aus Gummi oder einem ähnlich verformbaren Elastomer bestehenden Dichtung auf der Welle. Während die Dichtung bei der Montage in Längsrichtung der Bremsnockenwelle bis in ihre endgültige Position aufgeschoben wird, führt der in etwa viertelkreisförmig gerundete Längsquerschnitt des Kragens dazu, dass der Kragen weniger weit aufgespreizt wird. Die Montage geht dadurch insgesamt reibungsärmer vonstatten. Zudem wird durch den in etwa viertelkreisförmigen Kragenquerschnitt während des Hinüberschiebens der Dichtung längs der Bremsnockenwelle ein etwaiges Ausfransen des Gummimaterials vermieden, aus dem der Kragen besteht.

Mit einer weiteren Ausgestaltung wird vorgeschlagen, dass der Kragen den Abschluss der Dichtung bildet und an dem dem Gleitdichtabschnitt abgewandten Ende des Schlauchabschnitts angeordnet ist. Auch diese Ausgestaltung mit Anordnung des radial vorspringenden Kragens am äußersten Ende der Dichtung erleichtert deren vorübergehendes radiales Aufweiten während des Montageprozesses. Außerdem ermöglicht die Ausgestaltung eine Sichtprüfung des korrekten Sitzes des Kragens in der Vertiefung bzw. Ringnut.

Gemäß einer weiteren Ausgestaltung ist der Gleitdichtabschnitt als ein dem Schlauchabschnitt abgewandt sich aufweitender Trichter ausgebildet, dessen Innenseite die Gleitdichtfläche bildet, wobei die Gleitdichtfläche gegen eine ringförmige Fläche an dem Bremsträger anliegt. Diese ringförmige Fläche an dem Bremsträger ist vorzugsweise entweder konisch oder aber kalottenförmig gestaltet, und sie kann mechanisch bearbeitet sein, um die Qualität der erzielten Abdichtung zu erhöhen.

Ein Ausführungsbeispiel der Erfindung wird im Folgenden anhand der Zeichnungen näher erläutert. Darin zeigen:
- Fig. 1: einen Teilschnitt durch eine Nockenwellenlagerung, wie sie Bestandteil einer Fahrzeug-Trommelbremse ist;
- Fig. 2: eine perspektivische Ansicht der Nockenwellenlagerung einschließlich eines die Nockenwelle betätigenden Gestängestellers, welcher die Trommelbremse sukzessive entsprechend dem mit der Zeit eintretenden Bremsbelagverschleiß nachstellt;
- Fig.3: einen Längsschnitt durch eine Dichtung, welche Bestandteil der Nockenwellenlagerung ist, gemeinsam mit einer stark vergrößerten Montagedarstellung des an der Dichtung ausgebildeten Kragens;
- Fig. 4: eine Seitenansicht der Dichtung und
- Fig. 5: eine perspektivische Ansicht der Dichtung.

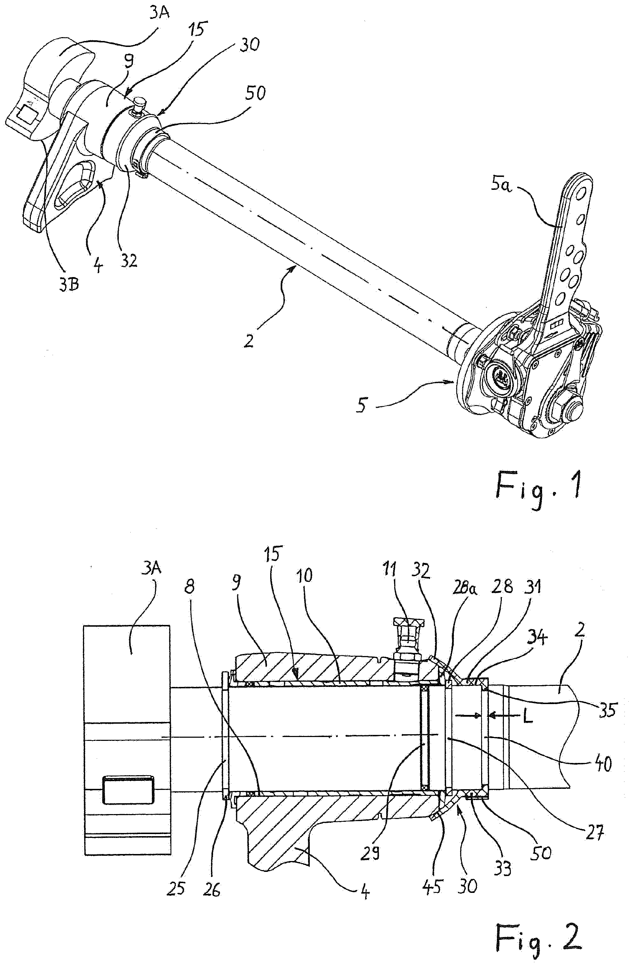

Die Fig. 1 zeigt eine sich parallel zu einer nicht dargestellten Fahrzeugachse erstreckende Bremsnockenwelle 2, welche an ihrem fahrzeugäußeren Ende, innerhalb einer Fahrzeug-Trommelbremse, starr mit zwei Nocken 3A, 3B versehen ist. Gemeinsam bilden die zwei Nocken 3A, 3B einen Doppelnocken bzw. Spreiznocken, durch den die beiden Bremsbeläge der Trommelbremse nach außen gegen die zylindrische Bremstrommel der Trommelbremse betätigt werden.

Die Bremsnockenwelle 2 ist in einem Bremsträger 4 drehgelagert. Der Bremsträger 4 ist z. B. starr an der Achse des Fahrzeugs befestigt. Er ist mit einer Lageröffnung 8 (Fig. 2) versehen, durch welche die Welle 2 hindurchführt.

Die Lageröffnung 8 befindet sich in einem Lagergehäuse 9, bei dem es sich um einen in Gestalt einer Buchse erweiterten Bereich des Bremsträgers 4 handelt. Zwischen der zylindrischen Lageröffnung 8 in dem Lagergehäuse 9 des Bremsträgers 4 und der ebenfalls zylindrischen Mantelfläche der Welle 2 ist eine Gleitlagerbuchse 10 angeordnet. Sie kann über einen Schmiernippel 11 mit Lagerfett versorgt werden.

Das Drehlager 15 und insbesondere der Bereich der Gleitlagerbuchse 10 muss zur Außenseite der Trommelbremse hin gegen ein Eintreten von Schmutz und Feuchtigkeit geschützt werden, und ebenso gegen ein Austreten des Lagerfetts. Zu diesem Zweck ist nach fahrzeuginnen eine Dichtung 30 vorhanden, die auf der Mantelfläche der Bremsnockenwelle 2 befestigt ist, und nach Art einer Schleifdichtung abdichtend gegen das in diesem Bereich kreisrunde Lagergehäuse 9 des Bremsträgers 4 anliegt.

An ihrem anderen, also der Trommelbremse abgewandten Ende ist die Bremsnockenwelle 2 mit einem automatischen Gestängesteller 5 versehen. Durch diesen kommt es, durch einen Bremsvorgang hervorrufen, zu einer mit der Zeit immer stärkeren Verdrehung der Bremsnockenwelle 2. Als Kraftglied dient ein hier nicht dargestellter Druckluft-Bremszylinder, der ebenso wie der Bremsträger 4 am Achskörper des Fahrzeuges befestigt ist, und dessen Kolbenstange mit dem Hebelarm 5a des automatischen Gestängestellers 5 verbunden ist. Der Gestängesteller 5 umfasst ein Getriebe, mit dessen Hilfe die Ausgangsstellung der Bremsnockenwelle 2 entsprechend dem Bremsbelagverschleiß selbsttätig nachgestellt wird. Üblicherweise umfasst ein solcher Gestängesteller 5 ein Getriebe mit einem Schneckenrad, welches mittels eines Keilwellenprofils auf ein entsprechendes Keilwellenprofil am fahrzeuginneren Ende der Bremsnockenwelle 2 drehfest aufgesteckt ist. Nähere Einzelheiten eines solchen Gestängestellers sind z. B. in der DE 44 12 802 C1 beschrieben.

Gemäß Fig. 2 sitzt die Bremsnockenwelle 2 durch Federbelastung axial fixiert in dem Drehlager 15. Zu diesem Zweck sitzt in einer ersten Ringnut 25 der Mantelfläche der Welle 2 ein erster Sicherungsring 26, und in einer zweiten Ringnut 27 ein zweiter Sicherungsring 28. Über den Sicherungsring 26 ist die Welle 2 in der einen, und über den Sicherungsring 28 und die Tellerfeder 28a in der anderen Längsrichtung gegenüber entsprechenden Stirnseiten des Lagergehäuses 9 abgestützt.

In einer weiteren Ringnut in der Mantelfläche befindet sich ein O-Ring 29, welcher als ein radiales Dämpfungselement dient.

Außerdem ist eine Dichtung 30 vorhanden, bei der es sich um ein Formteil aus Gummi handelt. Die Dichtung 30 setzt sich einstückig zusammen aus einem auf der Mantelfläche der Nockenwelle 2 verdrehfest montierten Befestigungsabschnitt 31 sowie einem gleitend bzw. schleifend gegen eine runde Fläche an dem Bremsträger 4 anliegenden Gleitdichtabschnitt 32.

Der Befestigungsabschnitt 31 setzt sich zusammen aus einem zylindrischen Schlauchabschnitt 33, der einen zylindrischen Abschnitt 34 der Mantelfläche umschließt, und einem im Vergleich zu dem Schlauchabschnitt 33 radial nach innen vorspringenden Kragen 35, mit dem die Dichtung 30 dem Drehlager 15 abgewandt abschließt.

Ausschließlich der das fahrzeuginnere Ende des Befestigungsabschnitts 31 bildende Kragen 35 ragt in eine hier als eine umlaufende Ringnut gestaltete Vertiefung 40, die sich in Wellenlängsrichtung an den zylindrischen Abschnitt 34 der Welle 2 anschließt.

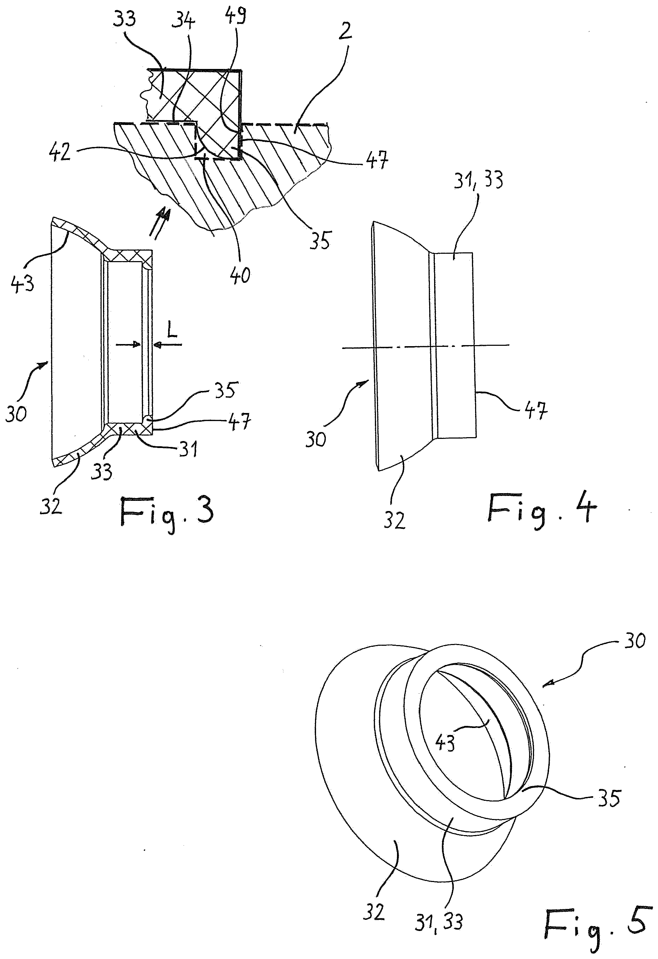

Die axiale Länge L der Ringnut bzw. Vertiefung 40 ist im Wesentlichen gleich der axialen Länge L des Kragens 35. Der Kragen 35 ist an dem dem Gleitdichtabschnitt 32 abgewandten Ende des Schlauchabschnitts 33 angeordnet. Der Kragen 35 ist als ein ringförmiger Radialbund ausgebildet, der gemäß Fig. 3 einen in etwa viertelkreisförmigen Längsquerschnitt aufweist, mit zu dem Gleitdichtabschnitt 32 hin weisender Viertelkreis-Rundung 42.

Die Rundung 42 erleichtert beträchtlich die Montage der aus Gummi oder einem ähnlich elastischen Elastomer bestehenden Dichtung 30 auf der Welle 2. Denn da die Dichtung 30 bei der Montage aufgeweitet und dann in Längsrichtung der Bremsnockenwelle bis in ihre endgültige Position aufgeschoben wird, führt der viertelkreisförmig gerundete Längsquerschnitt des Kragens 35 dazu, dass dieser weniger weit aufgeweitet werden muss. Die Montage geht dadurch auch insgesamt reibungsärmer vonstatten. Zudem verhindert der viertelkreisförmige Kragenquerschnitt während des Hinüberschiebens der Dichtung längs der Bremsnockenwelle 2 ein etwaiges Ausfransen des Gummimaterials, aus dem der Kragen 35 besteht.

Für eine günstige Abstützung in Wellenlängsrichtung erstreckt sich die andere, also die dem Drehlager 15 abgewandte Stirnfläche 47 des Kragens 35 rechtwinklig zu der Längsachse der Welle 2. Gleiches gilt für die entsprechende Wand 49 der Vertiefung 40, gegen die die Stirnfläche 47 axial abgestützt ist.

Der Gleitdichtabschnitt 32 ist als ein dem zylindrischen Schlauchabschnitt 33 abgewandt sich aufweitender Trichter ausgebildet. Dessen Innenseite bildet eine Gleitdichtfläche 43, die gegen eine Fläche 45 an dem Lagergehäuse 9 des Bremsträgers 4 anliegt. Diese Fläche 45 ist entweder konisch oder kalottenförmig gestaltet, um so einen großflächigen, druckarmen Schleifkontakt herzustellen.

Ist die Dichtung 30 richtig platziert, wird zum Schluss eine nur den Befestigungsabschnitt 31 umgebende Rohrschelle 50 aufgesetzt und angezogen. Es kann sinnvoll sein, auf der Außenseite des Befestigungsabschnitts 31 eine umlaufende Vertiefung auszubilden, in der die Rohrschelle 50 sitzt, wobei die Länge einer solchen Vertiefung in etwa gleich der axialen Länge der Rohrschelle ist.

### Bezugszeichenliste

- 2: Bremsnockenwelle, Welle
- 3A: Nocken
- 3B: Nocken
- 4: Bremsträger
- 5: Gestängesteller
- 5a: Hebelarm
- 8: Lageröffnung
- 9: Lagergehäuse
- 10: Gleitlagerbuchse
- 11: Schmiernippel
- 15: Drehlager
- 25: Ringnut
- 26: Sicherungsring
- 27: Ringnut
- 28: Sicherungsring
- 28a: Tellerfeder
- 29: O-Ring
- 30: Dichtung
- 31: Befestigungsabschnitt
- 32: Gleitdichtabschnitt
- 33: Schlauchabschnitt
- 34: zylindrischer Abschnitt
- 35: Kragen
- 40: Vertiefung, Ringnut
- 42: Viertelkreis-Rundung
- 43: Gleitdichtfläche
- 45: Fläche
- 47: Stirnfläche
- 49: Wand
- 50: Rohrschelle

- L: Länge

## Patentansprüche

1. Nockenwellenlagerung mit einer einen Nocken (3A, 3B) zum Spreizen der Bremsbacken einer Fahrzeug-Trommelbremse tragenden Welle (2) und einem zwischen der Welle (2) und einer Lageröffnung (8) in einem gegenüber dem Fahrzeug drehfesten Bremsträger (4) angeordneten Drehlager (15), welches, dem Nocken (3A, 3B) abgewandt, mit einer Dichtung (30) aus einem verdrehfest montierten Befestigungsabschnitt (31) und einem dazu einstückigen Gleitdichtabschnitt (32) versehen ist, **dadurch gekennzeichnet, dass** der Befestigungsabschnitt (31) auf der Welle (2) montiert ist, und dass der Befestigungsabschnitt (31) zumindest auf einem Teil seiner Länge in eine Vertiefung (40) in der Mantelfläche der Welle (2) ragt.

2. Nockenwellenlagerung nach Anspruch 1, **dadurch gekennzeichnet, dass** die Vertiefung (40), dem Drehlager (15) abgewandt, durch eine Wand (49) begrenzt ist, die sich rechtwinklig zu der Längsachse der Welle (2) erstreckt und gegen die sich der Befestigungsabschnitt (31) in Längsrichtung abstützt.

3. Nockenwellenlagerung nach Anspruch 1 oder 2, **dadurch gekennzeichnet, dass** sich der Befestigungsabschnitt (31) zusammensetzt aus einem Schlauchabschnitt (33), der einen zylindrischen Abschnitt (34) der Mantelfläche der Welle (2) umschließt, und aus einem gegenüber dem Schlauchabschnitt (33) radial nach innen vorspringenden Kragen (35), wobei ausschließlich der Kragen (35) in die Vertiefung (40) ragt.

4. Nockenwellenlagerung nach Anspruch 3, **dadurch gekennzeichnet, dass** sich die Vertiefung (40) in Wellenlängsrichtung an den zylindrischen Abschnitt (34) anschließt.

5. Nockenwellenlagerung nach Anspruch 3 oder 4, **dadurch gekennzeichnet, dass** der Kragen (35) das dem Drehlager (15) abgewandte Ende des Befestigungsabschnitts (31) bildet.

6. Nockenwellenlagerung nach einem der Ansprüche 3 bis 5, **dadurch gekennzeichnet, dass** die Vertiefung (40) als eine Ringnut in der Mantelfläche der Welle (2) ausgebildet ist, deren axiale Länge (L) im Wesentlichen gleich ist der axialen Länge (L) des Kragens (35).

7. Nockenwellenlagerung nach einem der Ansprüche 3 bis 6, **dadurch gekennzeichnet, dass** der Kragen (35) als ein ringförmiger Radialbund ausgebildet ist.

8. Nockenwellenlagerung nach einem der Ansprüche 3 bis 7, **dadurch gekennzeichnet, dass** der Kragen (35) von viertelkreisförmigem Längsquerschnitt mit zu dem Gleitdichtabschnitt (32) hin gerichteter Viertelkreis-Rundung (42) ist.

9. Nockenwellenlagerung nach einem der Ansprüche 3 bis 8, **dadurch gekennzeichnet, dass** der Kragen (35) an dem dem Gleitdichtabschnitt (32) abgewandten Ende des Schlauchabschnitts (33) angeformt ist.

10. Nockenwellenlagerung nach einem der vorangehenden Ansprüche, **dadurch gekennzeichnet, dass** der Gleitdichtabschnitt (32) als ein dem Schlauchabschnitt (33) abgewandt sich aufweitender Trichter ausgebildet ist, dessen Innenseite die Gleitdichtfläche (43) bildet, wobei die Gleitdichtfläche (43) gegen eine Fläche (45) an dem Bremsträger (4) anliegt.

11. Nockenwellenlagerung nach Anspruch 10, **dadurch gekennzeichnet, dass** die Fläche (45) an dem Bremsträger (4) konisch oder kalottenförmig gestaltet ist.

12. Dichtung für das Drehlager einer Bremsnockenwelle einer Fahrzeug-Trommelbremse, mit einem verdrehfest montierbaren Befestigungsabschnitt (31) und einem dazu einstückigen Gleitdichtabschnitt (32), wobei sich der Befestigungsabschnitt (31) zwecks seiner Montage auf der Bremsnockenwelle zusammensetzt aus einem zylindrischen Schlauchabschnitt (33) und einem gegenüber dem zylindrischen Schlauchabschnitt (33) radial nach innen vorspringenden Kragen (35), und wobei der Gleitdichtabschnitt (32) als ein dem Schlauchabschnitt (33) abgewandt sich aufweitender Trichter ausgebildet ist, dessen Innenseite die Gleitdichtfläche (43) des Gleitdichtabschnitts (32) bildet.

13. Dichtung nach Anspruch 12, **dadurch gekennzeichnet, dass** der Kragen (35) als ein ringförmiger Radialbund ausgebildet ist.

14. Dichtung nach Anspruch 12 oder 13, **dadurch gekennzeichnet, dass** der Kragen (35) von viertelkreisförmigem Längsquerschnitt mit zu dem Gleitdichtabschnitt (32) hin gerichteter Viertelkreis-Rundung (42) ist.

15. Dichtung nach einem der Ansprüche 12 bis 14, **dadurch gekennzeichnet, dass** der Kragen (35) das dem Gleitdichtabschnitt (32) abgewandte Ende des Befestigungsabschnitts (31) bildet.

## Claims

1. A cam shaft support comprising a shaft (2) carrying a cam (3A, 3B) for spreading the brake shoes of a vehicle drum brake and a rotary bearing (15) arranged between the shaft (2) and a bearing opening (8) in a brake carrier (4) which is non-rotatable with respect to the vehicle, which rotary bearing (15) remote from the cam (3A, 3B) is provided with a seal (30) comprising a non-rotatably mounted fixing portion (31) and a sliding sealing portion (32) in one piece therewith, **characterised in that** the fixing portion (31) is mounted on the shaft (2) and that the fixing portion (31) projects at least on a part of its length into a recess (40) in the peripheral surface of the shaft (2).

2. A cam shaft support according to claim 1 **characterised in that** the recess (40), remote from the rotary bearing (15), is delimited by a wall (49) which extends at a right angle to the longitudinal axis of the shaft (2) and against which the fixing portion (31) bears in the longitudinal direction.

3. A cam shaft support according to claim 1 or claim 2 **characterised in that** the fixing portion (31) is composed of a tube portion (33) surrounding a cylindrical portion (34) of the peripheral surface of the shaft (2) and a collar (35) which projects radially inwardly with respect to the tube portion (33), wherein exclusively the collar (35) projects into the recess (40).

4. A cam shaft support according to claim 3 **characterised in that** the recess (40) adjoins the cylindrical portion (34) in the longitudinal direction of the shaft.

5. A cam shaft support according to claim 3 or claim 4 **characterised in that** the collar (35) forms the end of the fixing portion (31), that is remote from the rotary bearing (15).

6. A cam shaft support according to one of claims 3 to 5 **characterised in that** the recess (40) is in the form of an annular groove in the peripheral surface of the shaft (2), the axial length (L) of which is substantially equal to the axial length of the collar (35).

7. A cam shaft support according to one of claims 3 to 6 **characterised in that** the collar (35) is in the form of an annular radial flange.

8. A cam shaft support according to one of claims 3 to 7 **characterised in that** the collar (35) is of a quarter circle-shaped longitudinal cross-section with a quarter-circle rounding (42) directed towards the sliding sealing portion (32).

9. A cam shaft support according to one of claims 3 to 8 **characterised in that** the collar (35) is formed at the end of the tube portion (33), that is remote from the sliding sealing portion (32).

10. A cam shaft support according to one of the preceding claims **characterised in that** the sliding sealing portion (32) is in the form of a funnel which enlarges away from the tube portion (33) and the inside of which forms the sliding sealing surface (43), wherein the sliding sealing surface (43) bears against a surface (45) on the brake carrier (4).

11. A cam shaft support according to claim 10 **characterised in that** the surface (45) on the brake carrier (44) is of a conical or dome-shaped configuration.

12. A seal for the rotary bearing of a brake cam shaft of a vehicle drum brake comprising a fixing portion (31) which can be non-rotatably mounted and a sliding sealing portion (32) in one piece therewith, wherein for the purposes of mounting thereof on the brake cam shaft the fixing portion (31) is composed of a cylindrical tube portion (33) and a collar (35) projecting radially inwardly with respect to the cylindrical tube portion (33), and wherein the sliding sealing portion (32) is in the form of a funnel which enlarges away from the tube portion (33) and the inside of which forms the sliding sealing surface (43) of the sliding sealing portion (32).

13. A seal according to claim 12 **characterised in that** the collar (35) is in the form of an annular radial flange.

14. A seal according to claim 12 or claim 13 **characterised in that** the collar (35) is of a quarter circle-shaped longitudinal cross-section with a quarter-circle rounding (42) directed towards the sliding sealing portion (32).

15. A seal according to one of claims 12 to 14 **characterised in that** the collar (35) forms the end of the fixing portion (31), that is remote from the sliding sealing portion (32).

## Revendications

1. Appui d'arbre à came avec un arbre (2) portant une came (3A, 3B) pour l'écartement des mâchoires de frein d'un frein à tambour de véhicule et avec un palier de pivot (15) qui est disposé entre l'arbre (2) et une ouverture de palier (8) dans un support de frein (4) solidaire en rotation par rapport au véhicule et qui, éloigné de la came (3A, 3B), est muni d'un joint (30) composé d'un tronçon de fixation (31) monté de façon résistante à la torsion et d'un tronçon de joint coulissant (32) d'un seul tenant, **caractérisé en ce que** le tronçon de fixation (31) est monté sur l'arbre (2) et **en ce que** le tronçon de fixation (31) dépasse, au moins sur une partie de sa longueur, dans un creux (40) dans la surface d'enveloppe de l'arbre (2).

2. Appui d'arbre à came selon la revendication 1, **caractérisé en ce que** le creux (40), éloigné du palier de pivot (15), est limité par une paroi (49) qui s'étend à angle droit par rapport à l'axe longitudinal de l'arbre (2) et contre laquelle le tronçon de fixation (31) s'appuie dans la direction longitudinale.

3. Appui d'arbre à came selon la revendication 1 ou 2, **caractérisé en ce que** le tronçon de fixation (31) se compose d'un tronçon de tuyau (33) qui entoure un tronçon (34) cylindrique de la surface d'enveloppe de l'arbre (2), et d'une collerette (35) faisant saillie de façon radiale vers l'intérieur par rapport au tronçon de tuyau (33), seule la collerette (35) dépassant dans le creux (40).

4. Appui d'arbre à came selon la revendication 3, **caractérisé en ce que** le creux (40) se raccorde, dans la direction longitudinale de l'arbre, au tronçon (34) cylindrique.

5. Appui d'arbre à came selon la revendication 3 ou 4, **caractérisé en ce que** la collerette (35) forme l'extrémité du tronçon de fixation (31) éloignée du palier de pivot (15).

6. Appui d'arbre à came selon l'une des revendications 3 à 5, **caractérisé en ce que** le creux (40) est constitué en tant que rainure annulaire dans la surface d'enveloppe de l'arbre (2) dont la longueur axiale (L) est essentiellement égale à la longueur axiale (L) de la collerette (35).

7. Appui d'arbre à came selon l'une des revendications 3 à 6, **caractérisé en ce que** la collerette (35) est constituée en tant que collet radial de forme annulaire.

8. Appui d'arbre à came selon l'une des revendications 3 à 7, **caractérisé en ce que** la collerette (35) a une section transversale longitudinale en forme de quart de cercle avec un arrondi en quart de cercle (42) dirigé vers le tronçon de joint coulissant (32).

9. Appui d'arbre à came selon l'une des revendications 3 à 8, **caractérisé en ce que** la collerette (35) est formée sur l'extrémité du tronçon de tuyau (33) qui est éloignée du tronçon de joint coulissant (32).

10. Appui d'arbre à came selon l'une des revendications précédentes, **caractérisé en ce que** le tronçon de joint coulissant (32) est constitué en tant qu'entonnoir s'élargissant, éloigné du tronçon de tuyau (33), et dont le côté intérieur forme la surface de joint coulissant(43), la surface de joint coulissant(43) étant adjacente au support de frein (4) contre une surface (45).

11. Appui d'arbre à came selon la revendication 10, **caractérisé en ce que** la surface (45) sur le support de frein (4) est constituée avec une forme conique ou une forme de calotte.

12. Joint pour le palier de pivot d'un arbre à came de frein d'un frein à tambour de véhicule avec un tronçon de fixation (31) pouvant être monté de façon résistante à la torsion et avec un tronçon de joint coulissant (32) d'une seule pièce avec celui-ci, le tronçon de fixation (31) se composant, en vue de son montage sur l'arbre à came de frein, d'un tronçon de tuyau (33) cylindrique et d'une collerette (35) faisant saillie radialement vers l'intérieur par rapport au tronçon de tuyau (33) cylindrique, et le tronçon de joint coulissant (32) étant constitué en tant qu'entonnoir s'élargissant, éloigné du tronçon de tuyau (33), et dont le côté intérieur forme la surface de joint coulissant(43) du tronçon de joint coulissant (32).

13. Joint selon la revendication 12, **caractérisé en ce que** la collerette (35) est constituée en tant que collet radial de forme annulaire.

14. Joint selon la revendication 12 ou 13, **caractérisé en ce que** la collerette (35) a une section transversale longitudinale en forme de quart de cercle avec un arrondi en quart de cercle (42) dirigé vers le tronçon de joint coulissant (32).

15. Joint selon l'une des revendications 12 à 14, **caractérisé en ce que** la collerette (35) forme l'extrémité du tronçon de fixation (31) éloignée du tronçon de joint coulissant (32).
